# EUROPEAN PATENT SPECIFICATION

(11) **EP 3 518 321 B1**
(45) Date of publication and mention of the grant of the patent: **12.06.2024**
(21) Application number: 16916857.2
(22) Date of filing: 23.09.2016
(51) Int. Cl.: H01M 10/0525

(54) **SECONDARY BATTERY**
SEKUNDÄRBATTERIE
BATTERIE RECHARGEABLE

(43) Date of publication of application: 31.07.2019
(73) Proprietor: Samsung SDI Co., Ltd., Yongin-si, Gyeonggi-do 17084 (KR)
(72) Inventor: JEONG, Hyun Ki, Yongin-si Gyeonggi-do 17084 (KR)
(74) Representative: Gulde & Partner
(86) International application number: PCT/KR2016/010707
(87) International publication number: WO 2018/056483

(56) References cited:
- JP-A- H11 167 914
- JP-A- 2004 259 547
- JP-A- 2004 259 547
- KR-A- 20000 070 565
- KR-A- 20090 114 126
- KR-A- 20130 028 848
- KR-B1- 100 462 128
- KR-B1- 100 462 128
- KR-B1- 100 871 917
- KR-B1- 100 871 917

## Description

### [Technical Field]

Embodiments of the present invention relate to a secondary battery having a high-output characteristic and a reduced defective rate.

### [Background Art]

Unlike primary batteries, secondary batteries can be repeatedly charged and discharged. In general, a low capacity secondary battery may be used as a power source for various small portable electronic devices, such as cellular phones, laptop computers or camcorders and a high capacity secondary battery may be used as power sources for electric automobiles or the like. The secondary battery includes an electrode assembly performing, for example, charge/discharge operations, a case accommodating the electrode assembly, and a cap assembly coupled to the case to prevent electrode assembly from being dislodged.

Meanwhile, gradually increasing application fields of the secondary batteries have led to increasing demands for high-capacity/high-output secondary batteries. Hence, there are increasing demands for suppressing various types of defects, such as a voltage drop or an open circuit voltage (OCV) deviating from an appropriate reference value, which may be caused when the secondary battery is fully charged.

A secondary battery is disclosed e.g. in KR 2013 0028848 A.

The above information disclosed in this Background section is only for enhancement of understanding of the background of the described technology and therefore it may contain information that does not form the prior art that is already known in this country to a person of ordinary skill in the art.

### [Technical Problems to be Solved]

Embodiments of the present invention provide a secondary battery having a high-output characteristic and a reduced defective rate.

The above and other objects of the present invention will be described in or be apparent from the following description of the preferred embodiments.

### [Technical Solutions]

In accordance with an aspect of the present invention, there is provided a secondary battery including a can, a cap assembly for sealing the can, and an electrode assembly contained in the can, the electrode assembly including a cathode plate, an anode plate, a separator disposed between the cathode plate and the anode plate, a cathode tab attached to the cathode plate and extending toward one of the can and the cap assembly, and an anode tab attached to the anode plate and extending toward the other of the can and the cap assembly, wherein the anode tab is made of nickel-plated copper. The anode tab has at least one edge further processed with chamfer treatment.

In addition, the anode tab may be made of nickel entirely plated on an outer circumferential surface with respect to a longitudinal direction in which the anode tab extends.

In addition, the anode tab may be made of nickel plated to have a weight ratio of 1 wt% or less.

In addition, the anode tab may be made of nickel plated to a thickness of 1.5 µm or less.

In addition, the anode tab may have a surface further processed with heat treatment.

In addition, the anode tab may have a surface further processed with chromate (CrO₃) treatment.

In addition, the anode tab has at least one edge further processed with chamfer treatment.

Here, the chamfer-treated edge of the anode tab may be planar.

In addition, the chamfer-treated edge of the anode tab may be curved.

### [Advantageous Effects]

As described above, according to embodiments of the present invention, the secondary battery is made of nickel-plated copper, thereby demonstrating a high-output characteristic while reducing a defective rate, compared to a case where the anode tab is made of nickel only.

In addition, according to the present invention, the secondary battery has an anode tab having at least one edge processed with chamfer treatment, thereby increasing welding quality in resistance welding.

### [Brief Description of Drawings]

FIG. 1 is a cut-away view of a secondary battery according to an embodiment of the present invention.
FIG. 2 is a transverse sectional view of an anode tab of the secondary battery according to an embodiment of the present invention.
FIG. 3 is a graph illustrating experimental data for comparing dissolution potentials in cases where the anode tab is made of copper only and where the anode tab is made of nickel-plated copper.
FIG. 4 is a transverse sectional view of an anode tab of a secondary battery according to another embodiment of the present invention.
FIG. 5 is a transverse sectional view of an anode tab of a secondary battery according to still another embodiment of the present invention.

### [Best Mode for Carrying Out the Invention]

Hereinafter, a preferred embodiment of the present invention will be described in detail.

Various embodiments of the present invention may be embodied in many different forms and should not be construed as being limited to the example embodiments set forth herein. Rather, these example embodiments of the disclosure are provided so that this disclosure will be thorough and complete and will convey inventive concepts of the disclosure to those skilled in the art.

In the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

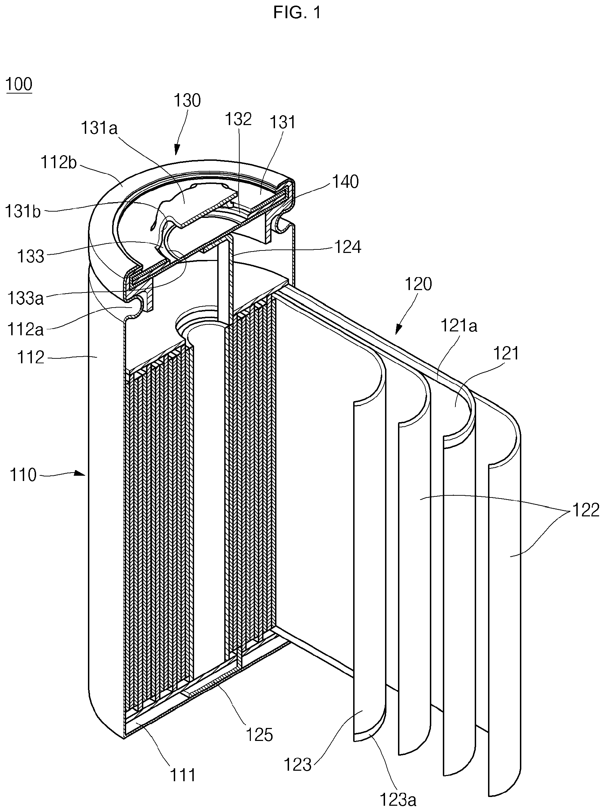

FIG. 1 is a cut-away view of a secondary battery 100 according to an embodiment of the present invention.

Referring to FIG. 1, the secondary battery 100 includes a can 110, an electrode assembly 120, a cap assembly 130, and a gasket 140.

The can 110 may include a bottom surface 111 having a substantially circular shape and sidewalls 112 upwardly extending a predetermined length from the bottom surface 111. That is to say, as illustrated in FIG. 1, the can 110 may be formed to have a substantially cylindrical shape. Of course, the can 110 may be formed to have a prismatic shape, unlike in FIG. 1. Meanwhile, a top end of the can 110 may be opened so as to receive the electrode assembly 120, an electrolyte solution, etc. therein in assembling the secondary battery 100.

The can 110 may include, for example, steel, a steel alloy, aluminum, an aluminum alloy or equivalents thereof. These materials are provided only for illustration, but the present invention does not limit the material of the can 110 to those disclosed therein.

In addition, a beading part 112a recessed into the can 110 to support a lower portion of the cap assembly 130 and a crimping part 112b bent to cover an upper portion of the cap assembly 130 to prevent the cap assembly 130 from being dislodged, which will later be described, may be formed at upper sides of the sidewalls 112 of the can 110.

The electrode assembly 120 may include a cathode plate 121, a separator 122, an anode plate 123, a cathode tab 124 and an anode tab 125.

The cathode plate 121 is formed by coating a cathode active material on a cathode current collector shaped of a metal foil. The cathode current collector may include, for example, aluminum, and the cathode active material may include, for example, a transition metal oxide, such as lithium cobalt oxide (LiCoO2), lithium nickel oxide (LiNiO2) or lithium manganese oxide (LiMn2O4), which are provided only for illustration, but the present invention does not limit the material of the cathode plate 121 to those disclosed therein.

Here, a cathode non-coating portion 121a without a cathode active material coated thereon is formed at a portion of the cathode plate 121.

The separator 122 is disposed between the cathode plate 121 and the anode plate 123 and prevents a short circuit from occurring due to a contact between the cathode plate 121 and the anode plate 123. In addition, the separator 122 may serve as a passageway for movement of, for example, lithium ions.

The separator 122 may include, for example, polyethylene (PE), polypropylene (PP) or a composite film of PE and PP, which are provided only for illustration, but the present invention does not limit the material of the separator 122 to those disclosed therein.

The anode plate 123 is formed by coating an anode active material on an anode current collector shaped of a metal foil. The anode current collector may include, for example, copper (Cu) or nickel (Ni), and the anode active material may include, for example, carbon. These materials are provided only for illustration, but the present invention does not limit the material of the anode plate 123 to those disclosed therein.

Here, an anode non-coating portion 123a without an anode active material coated thereon is also formed at a portion of the anode plate 123.

A stack including the cathode plate 121, the separator 122 and the anode plate 123 is wound in a jelly roll configuration to be received in the can 110, as stated above.

The cathode tab 124 made of a conductive material, such as aluminum, has one end attached to the cathode non-coating portion 121a and the other end generally extending toward the cap assembly 130, as illustrated in FIG. 1, to then be coupled to the cap assembly 130. In this case, the cap assembly 130 may function as a cathode. Of course, the cathode tab 124 may be coupled to be electrically connected to the can 110, unlike in FIG. 1. However, the following description will be made by way of example with regard to a case where the cathode tab 124 is coupled to be electrically connected to the cap assembly 130, as illustrated in FIG. 1.

The anode tab 125 made of a conductive material has one end attached to the anode non-coating portion 123a and the other end generally extending toward the bottom surface 111 of the can 110 by resistance welding, as illustrated in FIG. 1, to then be coupled to the can 110. In this case, the can 110 may function as an anode. Of course, as stated above, if the cathode tab 124 is coupled to be electrically connected to the can 110, the anode tab 125 is coupled to be electrically connected to the cap assembly 130, unlike in FIG. 1.

Meanwhile, nickel (Ni) has been proposed as a material of the anode tab 125. However, nickel has a specific resistance of approximately 69.3 nΩ·m, which is relatively high, making it disadvantageous in providing the secondary battery 100 having a high-output characteristic, and generating high temperature heat to cause unwanted deformation to the separator 122.

In addition, copper (Cu) having a smaller specific resistance than nickel (Ni) has been proposed as an alternative material of the anode tab 125. However, copper has a low dissolution potential so that it is easily dissolved, resulting in a minute short circuit and increasing a defective rate with respect to dV and OCV. Moreover, since copper is highly brittle, a relatively large amount of alien materials may be produced due to burrs during manufacture, causing a minute short circuit during operation of the secondary battery 100 and resulting in an increased possibility of further increasing the defective rate.

In light of the foregoing, the anode tab 125 of the present invention is made of nickel-plated copper.

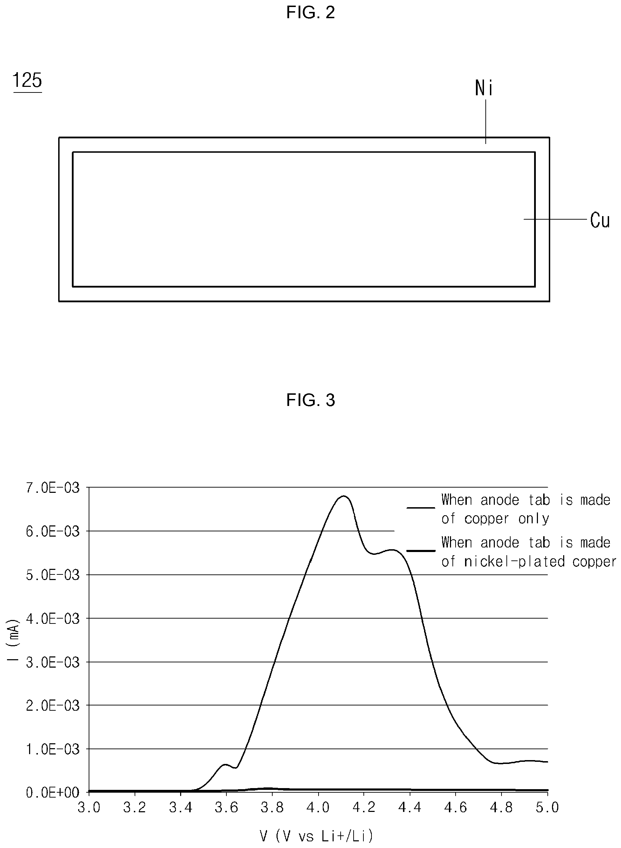

FIG. 2 is a transverse sectional view of an anode tab 125 of the secondary battery 100 according to an embodiment of the present invention, that is, a cross-sectional view of the anode tab 125, taken along a plane perpendicular to a longitudinal direction in which the anode tab 125 extends.

Referring to FIG. 2, the anode tab 125 is configured such that surfaces of copper are enclosed by nickel, as described above. That is to say, as illustrated in FIG. 2, four surfaces, i.e., top, bottom, right and left surfaces, of copper are all enclosed by nickel. Although it is preferable to plate all of the four surfaces with nickel, all of the four surfaces are not necessarily plated with nickel. When necessary, unlike in FIG. 2, some of the four surfaces may be entirely plated with nickel or may be partially plated with nickel. However, the following description will be made by way of example with regard to a case where all of the four surfaces are entirely plated with nickel, as illustrated in FIG. 2.

Here, nickel may be plated by electroplating, electroless plating or a combination thereof.

Accordingly, the anode tab 125 may have a reduced specific resistance, compared to a case where the anode tab 125 is made of nickel only, thereby providing the secondary battery 100 having an improved high-output characteristic. Here, nickel may be plated to have a weight ratio of approximately 1 wt% or less so as to obtain a high-output characteristic equivalent to a case where the anode tab 125 is made of pure copper.

In addition, since the surfaces of copper are not exposed, it is possible to prevent dissolution of copper, as confirmed from the graph illustrated in FIG. 3.

FIG. 3 is a graph illustrating experimental data for comparing dissolution potentials in cases where the anode tab 125 is made of copper only and where the anode tab 125 is made of copper plated with nickel to a thickness of approximately 1.5 µm.

Referring to FIG. 3, dissolution of copper starts in a range of generally used voltages when the anode tab 125 is made of copper only, but no dissolution is observed even in a slightly higher range than the generally used voltage range when the anode tab 125 is made of nickel-plated copper.

Table 1 shows data of defective rates measured when the anode tab 125 is made of copper (Cu) only and when the anode tab 125 is made of copper (Cu) plated with nickel (Ni) to thicknesses of approximately 0.5 µm, approximately 1 µm and approximately 1.5 µm, respectively. Here, tests were carried out a number of times in each case, and ratios of defective anode tabs relative to a total number of tested anode tabs were calculated.

**Table 1**

| | Cu | | Appr. 0.5 µm plated with Ni | | Appr. 1 µm plated with Ni | | Appr. 1.5 µm plated with Ni | |
|---|---|---|---|---|---|---|---|---|
| Total test pieces | 8,483 | | 249 | | 420 | | 399 | |
| | Defects | Defective rate | Defects | Defective rate | Defects | Defective rate | Defects | Defective rate |
| OCV after temperature exposure | 37 | 0.44% | 3 | 1.20% | 1 | 0.24% | 0 | 0.00% |
| OCV3 | 32 | 0.38% | 1 | 0.40% | 3 | 0.71% | 0 | 0.00% |
| dV | 118 | 1.39% | 1 | 0.40% | 1 | 0.24% | 1 | 0.25% |
| Sum | 187 | 2.20% | 5 | 2.01% | 5 | 1.19% | 1 | 0.25% |

As indicated from Table 1, when the anode tab 125 is made of copper only, the sum of defective rates ([Sum]=[OCV after high temperature exposure]+[OCV3]+[dV]) was 2.20%, which is relatively high. However, when the anode tab 125 is made of nickel-plated copper, sums of defective rates were reduced from 2.01% to 0.25% according to the thickness of nickel plated. This suggests that dissolution of copper can be prevented by employing nickel-plated copper as a material for forming the anode tab 125, as stated above.

In addition, as confirmed from Table 1, as the thickness of nickel plated is increased, the defective rate was further reduced. However, since an appropriate rate of good products is attained when nickel is plated on the surface(s) of copper to a thickness of approximately 1.5 µm, it is preferably to plate nickel on the surface(s) of copper to a thickness of approximately 1.5 µm or less, thereby avoiding an excessive increase in the manufacturing cost due to unnecessarily thickly plated nickel.

Once the anode tab 125 is made of nickel-plated copper, the defective rate can be further reduced, compared to a case where the anode tab 125 is made of copper only. Thus, a lower limit of the weight ratio or thickness of nickel plated will not be specifically defined.

In order to obtain desired material characteristics, heat treatment for achieving, for example, increased hardness, may further be performed on surfaces of the anode tab 125. In addition, in order to increase corrosion resistance, chromate (CrO₃) treatment may further be performed on surfaces of the anode tab 125.

Referring back to FIG. 1, the cap assembly 130 installed on the beading part 112a of the can 110 may seal the can 110. The cap assembly 130 may include a cap-up 131, a safety device 132 and a safety vent 133.

An upwardly convexly protruding terminal part 131a is formed at the center of the cap-up 131 to be electrically connected to an external circuit. In addition, an outlet 131b is formed to release internal gases generated in the can 110.

The safety device 132 may be disposed under the cap-up 131. The safety device 132, which is a positive temperature coefficient (PTC) device having increased resistance as the temperature rises, may function to prevent current from flowing between the cathode tab 124 and the cap-up 131 of the electrode assembly 120 due to increased resistance when the secondary battery 100 is over-heated.

The safety vent 133 is disposed under the safety device 132 to then be electrically connected to the cathode tab 124 of the electrode assembly 120. A notch 133a is formed in the safety vent 133. When a pressure is applied to the safety vent 133 due to the gases generated in the can 110, the safety vent 133 is ruptured along the notch 133a. Here, the gases are released through gaps created by the rupturing of the safety vent 133, thereby preventing the secondary battery 100 from exploding due to excessive pressure.

When necessary, the cap assembly 130 may further include an insulation sheet or an auxiliary plate between the cap-up 131 and the safety device 132 or between the safety device 132 and the safety vent 133.

The gasket 140 made of an insulating material is installed between the can 110 and the cap assembly 130. As described above, the can 110 may operate as an anode, and the cap assembly 130 may operate as a cathode. Here, based on the foregoing description, the gasket 140 may function to prevent a short circuit from occurring due to a contact between the can 110 and the cap assembly 130.

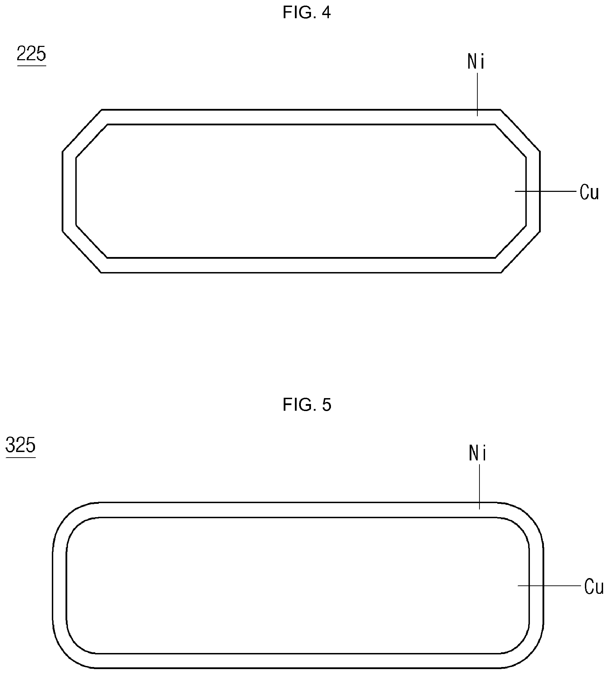

FIG. 4 is a transverse sectional view of an anode tab 225 of a secondary battery according to another embodiment of the present invention, and FIG. 5 is a transverse sectional view of an anode tab 325 of a secondary battery according to still another embodiment of the present invention.

As stated above, the anode tab 125 may be coupled to the bottom surface 111 of the can 110 by resistance welding. Here, since the anode tab 125 includes copper having low resistivity, welding strength of the anode tab 125 may be slightly lowered, compared to a case where the anode tab 125 includes only nickel. In this regard, the welding strength of the anode tab 125 may be increased by applying increased current. However, unwanted conduction may occur to edges of the anode tab 125, specifically burrs of the edges generated in the course of shaping the anode tab 125, thereby increasing the possibility of lowering welding quality.

To avoid this, the edges of the anode tabs 225 and 325 may be processed by chamfer treatment.

Here, the chamfer-treated edges of the anode tabs 225 and 325 may be planar, as illustrated in FIG. 4.

In addition, the chamfer-treated edges of the anode tabs 225 and 325 may be curved, as illustrated in FIG. 5.

In addition, the chamfer treatment may be performed on all of the edges of the anode tabs 225 and 325. However, as illustrated in FIGS. 4 and 5, the chamfer treatment may be performed on the edges of the anode tabs 225 and 325, which are parallel with longitudinal directions in which the anode tabs 225 and 325 extend, respectively. Alternatively, unlike in FIGS. 4 and 5, the chamfer treatment may be performed on some of the edges of the anode tabs 225 and 325, respectively.

Meanwhile, the processing may be performed in such an order that chamfer treatment is first subjected to copper formed in a tab-like shape, edges of the tab-like copper are cut and nickel is then plated on the edges. Alternatively, the processing may be performed in such an order that nickel is first plated on the tab-like copper and chamfer treatment is then subjected to the nickel plated copper.

That is to say, the processing may be performed in different manners according to individual design conditions.

## Claims

1. A secondary battery (100) comprising:
a can (110);
a cap assembly (130) for sealing the can (110); and
an electrode assembly (120) contained in the can (110), the electrode assembly (120) comprising:
a cathode plate (121);
an anode plate (123);
a separator (122) disposed between the cathode plate (121) and the anode plate (123);
a cathode tab (124) attached to the cathode plate (121) and extending toward one of the can (110) and the cap assembly (130); and
an anode tab (125) attached to the anode plate (123) and extending toward the other of the can (110) and the cap assembly (130),
wherein the anode tab (125) is made of nickel-plated copper,
**characterized in that**
the anode tab (225, 325) has at least one edge further processed with chamfer treatment.

2. The secondary battery of claim 1, wherein the chamfer-treated edge of the anode tab (225) is planar.

3. The secondary battery of claim 1, wherein the chamfer-treated edge of the anode tab (325) is curved.

## Patentansprüche

1. Sekundärbatterie (100), umfassend:
eine Dose (110);
eine Abdeckanordnung (130) zum Verschließen der Dose (110); und
eine Elektrodenanordnung (120), die in der Dose (110) enthalten ist, wobei die Elektrodenanordnung (120) umfasst:
eine Kathodenplatte (121);
eine Anodenplatte (123);
einen Separator (122), der zwischen der Kathodenplatte (121) und der Anodenplatte (123) angeordnet ist;
eine Kathodenlasche (124), die an der Kathodenplatte (121) befestigt ist und sich in Richtung einer der Dose (110) und der Abdeckanordnung (130) erstreckt; und
eine Anodenlasche (125), die an der Anodenplatte (123) befestigt ist und sich in Richtung der anderen der Dose (110) und der Abdeckanordnung (130) erstreckt,
wobei die Anodenlasche (125) aus vernickeltem Kupfer hergestellt ist,
**dadurch gekennzeichnet, dass**
die Anodenlasche (225, 325) mindestens einen Rand aufweist, der mit einer Fasenbehandlung weiter bearbeitet wurde.

2. Sekundärbatterie nach Anspruch 1, wobei der fasenbehandelte Rand der Anodenlasche (225) eben ist.

3. Sekundärbatterie nach Anspruch 1, wobei der fasenbehandelte Rand der Anodenlasche (325) gekrümmt ist.

## Revendications

1. Batterie rechargeable (100) comprenant :
un boîtier (110) ;
un ensemble capuchon (130) pour sceller le boîtier (110) ; et
un ensemble électrode (120) contenu dans le boîtier (110), l'ensemble électrode (120) comprenant :
une plaque de cathode (121) ;
une plaque d'anode (123) ;
un séparateur (122) disposé entre la plaque de cathode (121) et la plaque d'anode (123) ;
une patte de cathode (124) fixée à la plaque de cathode (121) et s'étendant vers l'un parmi le boîtier (110) et l'ensemble capuchon (130) ; et
une patte d'anode (125) fixée à la plaque d'anode (123) et s'étendant vers l'autre parmi le boîtier (110) et l'ensemble capuchon (130),
dans lequel la patte d'anode (125) est constituée de cuivre plaqué de nickel,
**caractérisée en ce que**
la patte d'anode (225, 325) présente au moins un bord soumis à un traitement de chanfrein supplémentaire.

2. Batterie rechargeable selon la revendication 1, dans laquelle le bord soumis au traitement de chanfrein de la patte d'anode (225) est plan.

3. Batterie rechargeable selon la revendication 1, dans laquelle le bord soumis au traitement de chanfrein de la patte d'anode (325) est incurvé.
